# EUROPEAN PATENT SPECIFICATION

(11) **EP 0 669 296 B1**
(45) Date of publication and mention of the grant of the patent: **04.03.1998**
(21) Application number: 94305858.6
(22) Date of filing: 08.08.1994
(51) Int. Cl.: C04B 35/622, C04B 35/624, C04B 35/634, H01M 8/10, H01M 8/12

(54) **Method for forming a composite metal oxide and method for manufacturing an electrode using the same**
Verfahren zur Herstellung eines zusammengesetzten Metalloxides und Verfahren zur Herstellung einer Elektrode mit demselben
Procédé de formage d'un oxide métallique composite et procédé de fabrication d'une électrode utilisant cela

(30) Priority: 23.02.1994 KR 9403233; 23.02.1994 KR 9403234; 23.02.1994 KR 9403235
(43) Date of publication of application: 30.08.1995
(73) Proprietor: Samsung Electronics Co., Ltd., Suwon-city, Kyungki-do 441-370 (KR)
(72) Inventor: Ho-jin, Kweon, c/o Energy Lab, Corp.Tech.Operation, Paldal-gu, Suwon-city, Kyungki-do (KR); Hae-Soo, Chun, Seonbuk-gu, Seoul (KR); Seung-Taik, Kuk, Eunpyeong-gu, Seoul (KR); Kil-Ho, Moon, Paldal-gu, Suwon-City, Kyungki-Do (KR); Keon, Kim, Koyang City, Kyungki-Do (KR); Huh-Beum, Park, Paldal-gu,Suwon-City, Kyungki-Do (KR)
(74) Representative: Neill, Alastair William

(56) References cited:
- WO-A-89/03806
- US-A- 5 169 811
- US-A- 5 185 301
- US-A- 5 266 419

## Description

### Background of the Invention

The present invention relates to a method for forming a composite metal oxide and a method for manufacturing an electrode using the same, and particularly, although not exclusively, relates to a method for forming a composite metal oxide in fine powder form and a method for manufacturing a porous fuel cell electrode using the same.

A fuel cell is a new generation system which converts the energy produced by the electrochemical reaction of a fuel gas and an oxidant gas directly into electrical energy. Since electrical energy is not produced by combustion but by an electrochemical reaction, fewer environmental pollutants are generated and noise is not produced. Thermal efficiency is also high. However, since the fuel cell operates at a high temperature, its electrolytes may evaporate and materials therefor may deteriorate. The fuel cell is under careful examination for use as a power source, such as that for space stations, unmanned facilities at sea or along coastal areas, fixed or mobile radios, automobiles, household electrical appliances or portable electrical appliances.

There are several types of fuel cells: e.g., a molten carbonate electrolyte fuel cell operating at a high temperature (in the range of about 500°C to about 700°C); a phosphoric acid electrolyte fuel cell operating at around 200°C; an alkaline electrolyte fuel cell operating at room temperature to about 100^{o}C; and a solid electrolyte fuel cell operating at very high temperatures (1,000°C or above).

A molten carbonate fuel cell (MCFC) is constituted by a porous nickel anode, a porous lithium-doped nickel-oxide cathode and a lithium aluminate matrix which is filled with lithium and potassium carbonate as electrolytes. The electrolytes are ionized by melting at about 500°C and the carbonate ions generated therefrom transfer a charge between the electrodes. NiO which has been mainly used as an MCFC cathode is an oxide having a comparatively high electrical conductivity and a very low price compared with other high temperature electrode materials which generally use high-priced rare metals. Also, NiO has good corrosion resistance compared with general metal oxides and is thus widely used. However, since a NiO cathode has a higher electrical resistance than the above-described anode, cell performance is lowered. Also, since the electrolyte is alkaline molten carbonate (Li₂CO₃/K₂CO₃) which is highly corrosive, there is a serious problem in that the NiO electrode may disintegrate with time.

Also, a solid oxide fuel cell (SOFC) uses yttrium- or calcium-stabilized zirconium oxide (ZrO₂-Y₂O₃ or ZrO₂-CaO) as its electrolyte, Ni-zirconia as its anode, a metal oxide such as LaMnO₃ or LaCoO₃ as its cathode, and a LaCrO₃-series metal oxide as its interconnector which connects adjacent cells. The electrolyte is solid in an SOFC at room temperature. However, oxygen lattice (O⁻²) has mobility and conductivity at an operative temperature of about 1,000°C. In other words, the oxygen gas converts into O⁻² ions at the cathode, which move toward the anode through the electrolyte to then react with H₂-CO.

As described above, in order to develop the performance of fuel cells such as MCFC or SOFC, research into various electrode materials is required. Specifically, the method for forming composite metal oxide powder with minute particles should be improved.

Perovskite (a composite oxide having a structural formula of ABO₃) is physicochemically stable at high temperatures. By selectively substituting the ions in the A or B positions in the above formula, electrical or magnetic properties thereof can be changed. Among perovskite-structured oxides, since lanthanum-perovskite (expressed by a general formula LaM'M''O₃, where M' represents an alkaline earth metal and M'' represents a transition metal such as Fe, Cr, Mn, Co, Ni or Cu) is highly electrically conductive and has good oxygen ion conductivity, it is under wide examination for its practical use as an air electrode for electrochemical applied materials such as generators, fuel cells and catalysts. In lanthanum-perovskite, partial substitution of lanthanum (La) by an alkaline earth metal such as Ca or Sr brings about high electrical conductivity. Particularly, since (La,Sr)MnO₃ and (La,Sr)CoO₃ have high electrical conductivity and excellent chemical stability, they are being widely looked at for their practical use as electrode materials.

Lanthanum-perovskite electrodes were first manufactured in about 1970 and have been proposed as high-temperature oxygen electrodes by D.B. Meadowcroft et al. However, in spite of various advantages, lanthanumperovskites are not being put into practical use as fuel cell electrodes because of various problems involved. For example, in manufacturing an MCFC cathode, NiO can be made into a powder whose specific surface area is large and whose particle diameter is small, by an industrial process. However, since perovskites are formed by a high-temperature heat-treatment method, the specific surface area thereof becomes small, which is not suitable for a porous MCFC electrode.

Among conventional methods for forming lanthanumperovskite powder, the most generally applicable one is a high-temperature heating method by which the respective metal oxides or carbonates are mixed in a stoichiometric ratio and then dried. Thereafter, the mixture is heated at a higher temperature of about 800°C to 1,100°C, thereby ultimately obtaining the resultant powder. This method gives a general perovskite powder. However, since the powder produced by the high-temperature heating method has a small specific surface area, the electrode manufactured therefrom also has a small specific surface area as well as low porosity which is of course undesirable for a porous electrode. It is preferred that the powder materials for porous electrodes should have small diameters and a large specific surface area.

In addition to the above-described high-temperature heating method, there are several methods for forming perovskite powder, including a method in which a precursor is synthesized by the coprecipitation of metal salts and then heat-dissolved, a method using a sol-gel formation, and a method using a polymer precursor. These methods each have their own advantages and disadvantages. Among these methods, since the method using a polymer precursor has little selectivity with respect to metal ions having different characteristics from one another, it is adopted for a complicated system and is a relatively simple method.

C. Marcilly et al. disclose a method for synthesizing a composite oxide by mixing citric acid with nitrates and/or acetates of metals (see *Journal of the American* *Ceramic Society*, 53, 56 (1970)). Also, U.S. Patent No. 5,168,095 discloses a method for synthesizing a composite oxide by mixing mixtures of at least two carbonates of metals selected from yttrium (Y), rare earth elements, transition elements, and alkali metal or alkaline earth metal elements with citric acid in an aqueous solution or in an organic solvent, dehydrating the mixtures, preheating the same at a temperature of about 800°C to 900°C and heating again at a temperature of about 940°C to 960°C. These methods also experience the step of heating at a high temperature, which make the specific surface area of the synthesized composite oxide small, and are thus still not suitable for application to porous fuel cell electrodes.

### Summary of the Invention

It is an object of the present invention to alleviate problems associated with known methods for forming composite metal oxides and/or for manufacturing electrodes for fuel cells such as MCFC or SOFC.

According to the invention, there is provided a method for forming a fine powder of a composite metal oxide which includes at least two metals, the method including the steps of:
contacting, in the liquid phase, ions of the at least two metals with a polymeric material which includes a repeat unit having an oxygen atom; and
processing the product in order to form a composite metal oxide powder.

It has been found that, by using a polymeric material having a functional group which can interact with metal ions, metal can be mixed on a molecular level, with the result that powder having small diameter particles can thereby be formed.

Preferably, said repeat unit of said polymeric material includes an oxygen atom bonded to two other atoms or groups. Preferably, said repeat unit of said polymeric material includes an ether or a hydroxyl group. Said repeat unit of said polymer may include a group of formula

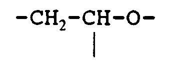

Said polymeric material may comprise at least one material selected from polyvinyl alcohol, polyvinyl butyral and polyethylene glycol.

The contacting of said ions and said polymeric material is preferably carried out in a solvent. Preferred solvents include water and C₁ to C₄ alcohols, for example ethanol.

Said at least two metals may be selected from rare earth metals, alkaline earth metals and transition metals. A preferred rare earth metal is lanthanum. A preferred alkaline earth metal is strontium. Preferred transition metals are iron, chromium, manganese, cobalt, nickel and copper, with cobalt and manganese being especially preferred.

Said composite metal oxide is preferably a perovskite of elemental formula (La,M')M''O₃, where M' represents an alkaline earth metal, and M'' represents a transition metal. Preferred transition metals are iron, chromium, manganese, cobalt, nickel and copper. Said perovskite preferably has an empirical formula La_{1-X}Sr_{X}M''O₃, where M'' preferably represents manganese, cobalt or chromium and X is greater than or equal to 0 and less than or equal to 0.6. Preferably, X is less than or equal to 0.4 and, more preferably, is less than or equal to 0.3.

Preferably, in the method, said at least two metals and said polymeric material are mixed in a solution. Preferably, a sol is formed after mixing. The sol may be processed, for example by heating, suitably so as to remove solvent, to form a gel. The gel may then be heated to a temperature of greater than 400°C but less than 750°C. Preferably, said gel is calcined. Said calcining may be performed at a temperature in the range 500°C to 700°C, preferably at about 600°C.

The method may be used to produce powders having an average diameter of less than 100nm and more preferably of less than 70 nm.

The invention extends to a method of manufacturing an electrode, the method comprising forming a fine powder of a composite metal oxide using the method described above and forming the fine powder into an electrode.

Preferably, the electrode is a fuel cell electrode.

Preferably, the formation of the electrode includes the step of casting the powder. Preferably, the formation includes sintering the powder after casting.

The invention extends to a method for forming a composite metal oxide as a fine powder comprising the steps of forming a mixture solution containing at least two metal ions, mixing a solution of at least one selected from the group consisting of polyvinyl alcohol, polyvinyl butyral and polyethylene glycol therewith, evaporating so as to dry the resultant, and then calcining the same.

The invention further extends to a method for manufacturing a fuel cell electrode comprising the steps of forming a mixture solution containing at least two metal ions, mixing a solution of at least one selected from the group consisting of polyvinyl alcohol, polyvinyl butyral and polyethylene glycol therewith, evaporating so as to dry the resultant, and then calcining the same, to form a composite metal oxide as a fine powder, casting the formed powder into an electrode, and sintering the same.

### Brief Description of the Drawings:

Specific embodiments of the present invention will now be described, by way of example, with reference to the accompanying drawings, in which:
FIGs.1A, 1B and 1C are X-ray diffraction patterns of perovskite powders formed according to respective Examples 1, 2 and 4; and
FIGs.2A, 2B and 2C are scanning electron microscope (SEM) pictures of perovskite powders formed according to respective Examples 1, 2 and 4.

### Detailed Description of Embodiments of the Invention

Polyvinyl alcohol, polyvinyl butyral and polyethylene glycol which may be used in embodiments of the invention have functional groups, in their repeat unit structures, which can interact with metal ions, and dissolve the metal ions and mix them in molecular units.

Polyvinyl alcohol (PVA) is a thermoplastic resin obtained by partial hydrolysis or complete hydrolysis of polyvinyl acetate and has a structure -[-CH₂CH(OH)-]ₙ-. Since PVA has hydroxyl groups in its chain structure which can interact with metal ions, each metal ion can be dissolved to then be mixed in molecular units. Also, PVA is a useful polymeric compound which is easily dissolved in a relatively cheap solvent, e.g., water, in which metal salts are also easily soluble.

Polyvinyl butyral (PVB), which is a kind of polyvinyl acetal produced such that part or most of the hydroxyl groups of polyvinyl alcohol are acetalized by reacting with butyl aldehyde under an acid catalyst, is existent as a mixture of PVB, PVA and PVAc mixed in an appropriate ratio, having the following general formula:

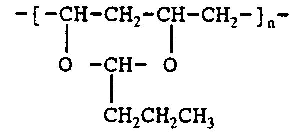

Since PVB has ether groups in its chain structure which can interact with metal ions, thereby to dissolve the respective metal ions and mix them in molecular units, it is a very useful polymeric compound. Additionally, it is easily dissolved in alcohol, in which metal salts are easily soluble.

PEG which is a polymer of ethylene glycols or ethylene oxides has a formula H[-OCH₂CH₂-]ₙOH. PEG is a useful polymeric compound which is easily soluble in water, i.e., a low-cost solvent in which metal salts are easily dissolved. PEG also has ether groups, in its chain structure, thereby enabling the respective metal ions to be dissolved and mixed in molecular units.

At least one polymeric compound described above is added to a composite metal ion solution to form a sol of metal ions mixed in molecular units, and then the sol is dried and thermally decomposed thereby forming a composite metal oxide of fine powder having a large specific surface area which is suitable in manufacturing electrodes for fuel cells such as MCFC or SOFC.

Hereinafter, a method for forming a composite metal oxide as a fine powder and a method for manufacturing fuel cell electrodes will be described in detail.

First, oxide, carbonate or nitrate compounds of metal components are weighed at a predetermined molar ratio and are dissolved in water and/or alcohol to form a mixed solution of metal ions. PVA, PVB and/or PEG of a predetermined amount are dissolved in water and/or alcohol, and then the resultant solution is completely mixed with the solution of metal ions, thereby forming a sol state of a metal salt-polymer compound.

The sol of metal salt-polymer compound is heated at 80°C or below and evaporated to remove the water and/or alcohol. At this time, as water and/or alcohol are evaporated, the sol state turns into a mixture of an extremely high viscosity.

The mixture of metal salt-polymer compound of an extremely high viscosity is continuously heated and thereby dried. Then, the resultant material is directly calcined by an electric furnace at 500 to 700°C, or is fired in an alumina crucible and then calcined by an electric furnace at 500 to 700°C, thereby obtaining a fine powder of composite metal oxide.

Fine perovskite powder formed by forming the sol and mixture of metal salt-polymer compound as in the above manner is mixed with a binder, a deflocculant, a plasticizer, a dispersing agent and a solvent to make a slurry, then the slurry is tape-casted into a plate sheet. Thereafter, it is sintered, to manufacture a porous fuel cell electrode.

The invention is now described with reference to the following Examples.

### EXAMPLE 1

La(NO₃)₂·6H₂O, Sr(NO₃)₂ and Co(NO₃)₂·6H₂O were weighed so that their molar ratio was 0.9:0.1:1 and were dissolved in distilled water. Next, more than 250 grams of PVA per mole of metal ions were dissolved in water and then the PVA solution was mixed with the aqueous solution of the metal ions to produce a sol state. The sol was heated at a temperature below 80°C to remove the water. When the water was evaporated, the sol was turned into a gel state whose viscosity was very high. After the gel was continuously heated to dryness, it was fired in an alumina crucible and calcined by an electric furnace at about 600°C to manufacture La_{0.9}Sr_{0.1}CoO₃ perovskite powder.

The formed La_{0.9}Sr_{0.1}CoO₃ perovskite powder was mixed with a binder, a deflocculant, a plasticizer, a dispersing agent and a solvent to make a slurry, then the slurry was tape-casted to form a sheet. Thereafter, the sheet was sintered, thereby manufacturing a porous fuel cell electrode.

### EXAMPLE 2

La(NO₃)₂·6H₂O, Sr(NO₃)₂ and Co(NO₃)₂·6H₂O were weighed so that their molar ratio was 0.9:0.1:1. Then, La(NO₃)₂·6H₂O and Co(NO₃)₂·6H₂O were dissolved in ethanol, and Sr(NO₃)₂ was dissolved in distilled water. More than 360 grams of PVB per mole of metal ions were dissolved in the ethanol, and then the PVB solution was mixed with the other two solution to produce a sol state. The sol was heated to remove the ethanol. When the ethanol was evaporated, the sol was turned into a gel state whose viscosity was very high. After the gel was continuously heated to dryness, it was fired in an alumina crucible and calcined by an electric heater at about 600°C to manufacture La_{0.9}Sr_{0.1}CoO₃ perovskite powder.

The formed La_{0.9}Sr_{0.1}CoO₃ perovskite powder was mixed with a binder, a deflocculant, a plasticizer, a dispersing agent and a solvent to make a slurry, then the slurry was tape-casted to form a sheet. Thereafter, the sheet was sintered, thereby manufacturing a porous fuel cell electrode.

### EXAMPLE 3

This example was performed in the same manner as Example 2, except that the La(NO₃)₂·6H₂O and Co(NO₃)₂·6H₂O having a molar ratio of 1:1 were used to form LaCoO₃ perovskite powder, without adding Sr(NO₃)₂. The formed powder was mixed with a binder, a deflocculant, a plasticizer, a dispersing agent and a solvent to make a slurry, then the slurry was tape-casted to form a sheet. Then, the sheet was sintered, thereby manufacturing a porous fuel cell electrode.

### EXAMPLE 4

La₂O₃ and SrCO₃ were weighed such that their molar ratio was 0.8:0.2 and were dissolved in a nitric acid solution to form an aqueous solution of nitrate salt. Mn(NO₃)₂ solution was then added so that the molar ratio of Mn was 1.0. Then, more than 200 grams of PEG (molecular weight 20,000) was added per mole of overall metals to the aqueous solution of La, Sr and Mn nitrates, formed as in the above manner, and completely mixed to produce a sol state. The sol was heated at a temperature below 80°C to remove the water. When the water was evaporated, the sol state was turned into a mixture state of a very high viscosity. After the mixture was continuously heated to dryness, it was fired in an alumina crucible and calcined by an electric heater at about 600°C, thereby forming La_{0.8}Sr_{0.2}MnO₃ perovskite powder.

The formed La_{0.8}Sr_{0.2}MnO₃ perovskite powder was mixed with a binder, a deflocculant, a plasticizer, a dispersing agent and a solvent to make a slurry, then the slurry was tape-casted and formed into a sheet. Thereafter, the sheet was sintered, thereby manufacturing a porous fuel cell electrode.

### EXAMPLE 5

This example was performed in the same manner as Example 4 except that Co(NO₃)₂·6H₂O, instead of Mn(NO₃)₂, was used to form La_{0.8}Sr_{0.2}CoO₃ perovskite powder. The formed powder was mixed with a binder, a deflocculant, a plasticizer, a dispersing agent and a solvent to make a slurry, then the slurry was tape-casted to form a sheet. Then, the sheet was sintered, thereby manufacturing a porous fuel cell electrode.

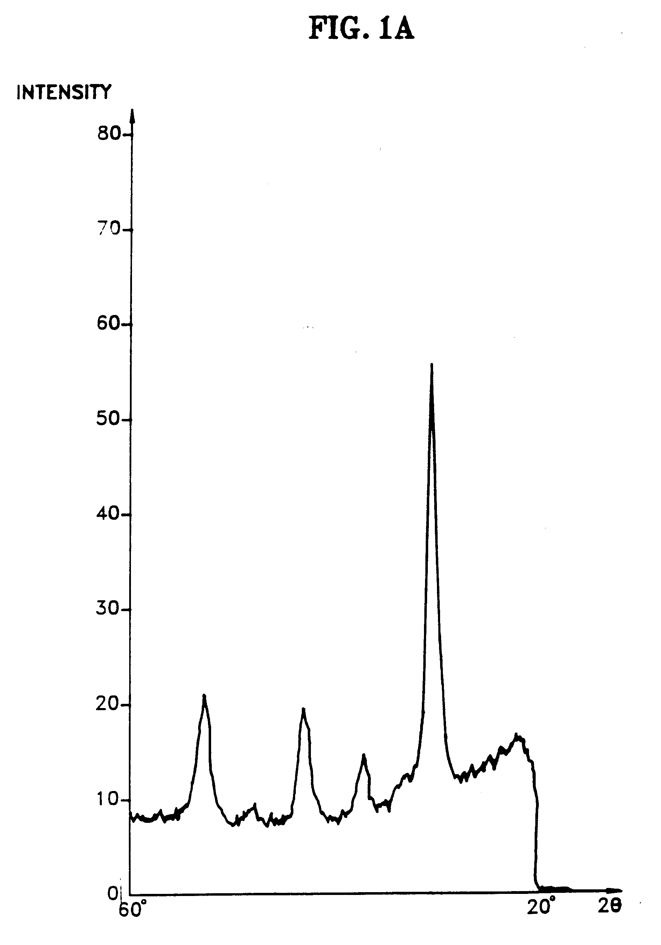

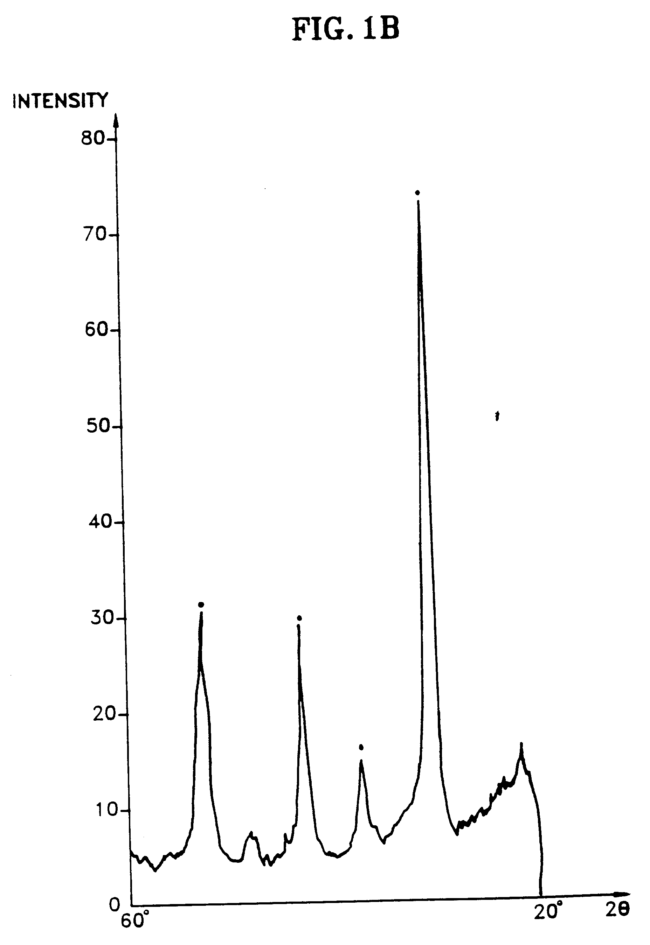

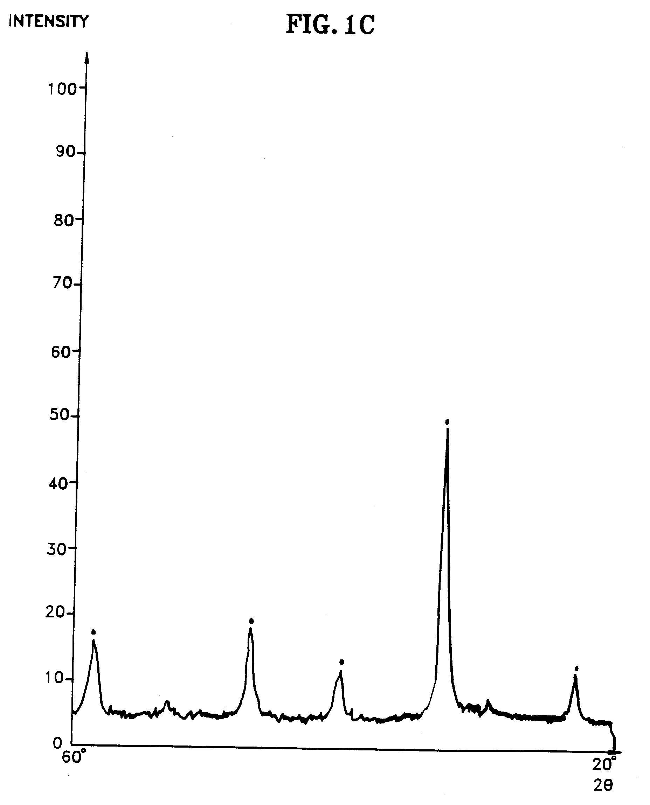

FIGs.1A and 1B are X-ray diffraction patterns of La_{0.9}Sr_{0.1}CoO₃ perovskite powders, formed in respectiveExamples 1 and 2, and FIG.1C is an X-ray diffraction picture of La_{0.8}Sr_{0.2}MnO₃ perovskite powder formed as in Example 4. Here, characteristic diffraction lines of a perovskite structure are shown.

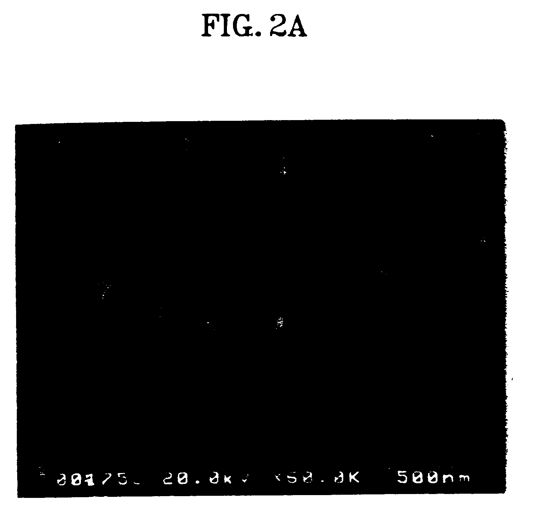

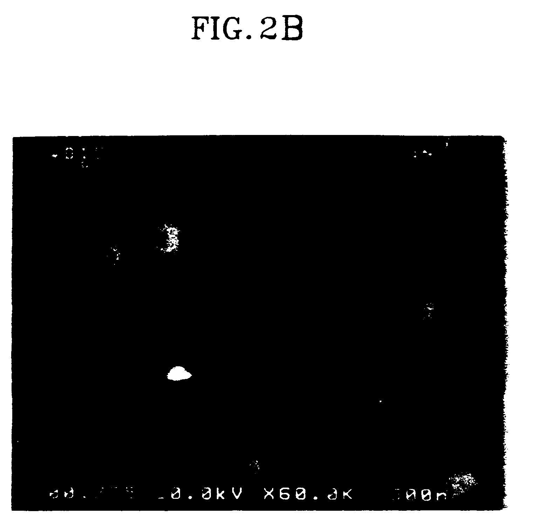

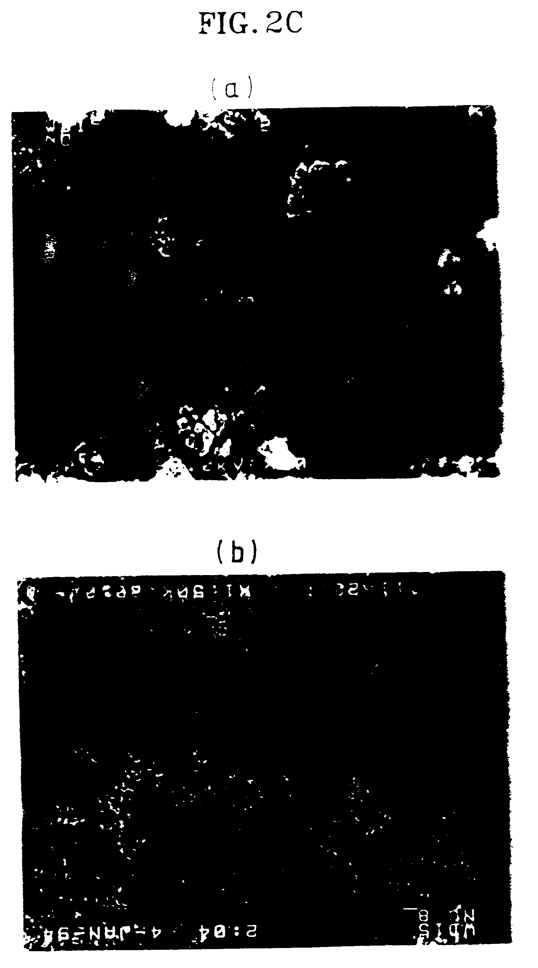

FIGs.2A and 2B are scanning electron microscope (SEM) pictures (60,000 times) of La_{0.9}Sr_{0.1}CoO₃ perovskite powder formed in respective Examples 1 and 2, and FIG.2C is a scanning electron microscope (SEM) picture (1,500 times) of La_{0.8}Sr_{0.2}MnO₃ perovskite powder, formed as in Example 4. Here, it can be seen that the powders formed according to preferred embodiments of the present invention are extremely minute, being in the range of 20nm to 60nm in diameter on average. A powder of such diameters is hard to form using conventional methods.

The following table indicates BET surface areas of the perovskite powders of Examples 1 to 3 and 5 compared with those made using conventional high-temperature heating.

| method | BET surface area (m²/g) | | |
|---|---|---|---|
| | La_{0.9}Sr_{0.1}CoO₃ | LaCoO₃ | La_{0.8}Sr_{0.2}CoO₃ |
| PVA mixture (heating @ 600°C) | 30 | | |
| PVB mixture (heating @ 600°C) | 19 | 14 | |
| PEG mixture (heating @ 600°C) | | | 17 |
| EDTA mixture (heating @ 800°C) | | 6.75 | 5.3 |
| high-temp. heating (800°C) | | 3.9 | 3.2 |
| high-temp. heating (1,100°C) | | 0.9 | 0.95 |

As shown in the above table, the surface area of the perovskite powders formed in Examples 1 to 3 and 5 is exceptionally higher than that formed using an EDTA mixture or conventional high-temperature heating.

Thus, it should now be appreciated that, forming a composite of metal and polymer compounds such as PVA, PVB and/or PEG, it is possible to manufacture an extremely fine composite metal oxide powder whose average diameter may be in the range of 20nm to 60nm.

If a fuel cell electrode is manufactured using a fine perovskite powder, the sintering temperature can be lowered and an electrode having a large specific surface area can be obtained. Therefore, fuel cell efficiency may be improved, and the productivity of manufacturing fuel cell electrodes may also advantageously be improved.

All of the features disclosed in this specification (including any accompanying claims, abstract and drawings), and/or all of the steps of any method or process so disclosed, may be combined in any combination, except combinations where at least some of such features and/or steps are mutually exclusive.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for forming a fine powder of a composite metal oxide which includes at least two metals, the method including the steps of:
contacting, in the liquid phase, ions of the at least two metals with a polymeric material which includes a repeat unit having an oxygen atom; and
processing the product in order to form a composite metal oxide powder.

2. A method according to Claim 1, wherein said repeat unit of said polymeric material includes an ether or a hydroxyl group.

3. A method according to Claim 1 or Claim 2, wherein said polymeric material comprises at least one material selected from polyvinyl alcohol, polyvinyl butyral and polyethylene glycol.

4. A method according to any preceding claim, wherein said composite metal oxide is a perovskite of elemental formula (La,M')M''O₃, where M' represents an alkaline earth metal, and M'' represents a transition metal.

5. A method according to Claim 4, wherein said perovskite has an empirical formula La_{1-X}Sr_{X}M''O₃, where M'' represents manganese, cobalt or chromium and X is greater than or equal to 0 and less than or equal to 0.6.

6. A method according to any preceding claim, wherein said at least two metals and said polymeric material are mixed in a solution, the resultant then being dried and calcined.

7. A method according to Claim 6, wherein calcining is performed at a temperature in the range 500°C to 700°C.

8. A method for forming a composite metal oxide as a fine powder comprising the steps of forming a mixture solution containing at least two metal ions, mixing a solution of at least one selected from the group consisting of polyvinyl alcohol, polyvinyl butyral and polyethylene glycol therewith, evaporating so as to dry the resultant, and then calcining the same.

9. A method of manufacturing an electrode, the method comprising forming a fine powder of a composite metal oxide using the method of any of Claims 1 to 8 and forming the fine powder into an electrode.

10. A method according to Claim 9, wherein the electrode is a fuel cell electrode.

## Patentansprüche

1. Verfahren zum Herstellen eines feinen Pulvers von einem zusammengesetzten Metalloxid, welches mindestens zwei Metalle einschließt, wobei das Verfahren die Schritte einschließt:
Inkontaktbringen, in der flüssigen Phase, von Ionen der mindestens zwei Metalle mit einem Polymermaterial, welches eine wiederkehrende Einheit mit einem Sauerstoffatom einschließt; und
Behandeln des Produkts, um ein zusammengesetztes Metalloxidpulver zu bilden.

2. Verfahren nach Anspruch 1, worin die wiederkehrende Einheit des Polymermaterials einen Ether oder eine Hydroxylgruppe einschließt.

3. Verfahren nach Anspruch 1 oder 2, worin das Polymermaterial mindestens ein Material, ausgewählt aus Polyvinylalkohol, Polyvinylbutyral und Polyethylenglycol, umfaßt.

4. Verfahren nach einem der vorhergehenden Ansprüche, worin das zusammengesetzte Metalloxid ein Perowskit mit der Elementformel (La,M')M''O₃ ist, wobei M' ein Erdalkalimetall bedeutet und M'' ein Übergangsmetall bedeutet.

5. Verfahren nach Anspruch 4, worin der Perowskit die Summenformel La_{1-X}Sr_{X}M''O₃ hat, wobei M'' Mangan, Kobalt oder Chrom bedeutet und X größer oder gleich 0 und kleiner oder gleich 0,6 ist.

6. Verfahren nach einem der vorhergehenden Ansprüche, worin die mindestens zwei Metalle und das Polymermaterial in einer Lösung vermischt werden, wobei das sich daraus ergebende Produkt dann getrocknet und calciniert wird.

7. Verfahren nach Anspruch 6, wobei das Calcinieren bei einer Temperatur im Bereich von 500°C bis 700°C durchgeführt wird.

8. Verfahren zum Herstellen eines zusammengesetzten Metalloxids als feines Pulver, umfassend die Schritte: Herstellen einer Mischungslösung, die mindestens zwei Metallionen enthält, Vermischen einer Lösung von mindestens einem Bestandteil, ausgewählt aus der Gruppe bestehend aus Polyvinylalkohol, Polyvinylbutyral und Polyethylenglycol, damit, Eindampfen, um das sich daraus ergebende Produkt zu trocknen, und anschließend Calcinieren des Produkts.

9. Verfahren zum Herstellen einer Elektrode, wobei das Verfahren das Herstellen eines feinen Pulvers von einem zusammengesetzten Metalloxid unter Verwendung des Verfahrens nach einem der Ansprüche 1 bis 8 und das Formen des feinen Pulvers zu einer Elektrode umfaßt.

10. Verfahren nach Anspruch 9, wobei die Elektrode eine Brennstoftzellenelektrode ist.

## Revendications

1. Procédé d'élaboration d'une poudre fine d'un oxyde métallique composite, qui comprend au moins deux métaux, le procédé comprenant les étapes de :
mise en contact, en phase liquide, d'ions desdits au moins deux métaux avec une matière polymère qui comprend une unité périodique ayant un atome d'oxygène ; et
de traitement du produit afin de former une poudre d'oxyde métallique composite.

2. Procédé selon la revendication 1, dans lequel ladite unité périodique de ladite matière polymère comprend un éther ou un groupement hydroxyle.

3. Procédé selon la revendication 1 ou la revendication 2, dans lequel ladite matière polymère comprend au moins une matière sélectionnée parmi l'alcool polyvinylique, le polyvinyl butyral et le polyéthylène glycol.

4. Procédé selon l'une quelconque des revendications précédentes, dans lequel ledit oxyde métallique composite est une pérovskite de formule élémentaire (La, M')M''O₃, où M' représente un métal alcalino-terreux, et M'' représente un métal de transition.

5. Procédé selon la revendication 4, dans lequel ladite pérovskite a une formule empirique La_{1-X}Sr_{X}M''O₃, où M'' représente le manganèse, le cobalt ou le chrome, et X est supérieur ou égal à 0 et inférieur ou égal à 0,6.

6. Procédé selon l'une quelconque des revendications précédentes, dans lequel lesdits au moins deux métaux et ladite matière polymère sont mélangés en une solution, le produit résultant étant ensuite séché et calciné.

7. Procédé selon la revendication 6, dans lequel la calcination est effectuée à une température de 500 °C à 700 °C.

8. Procédé d'élaboration d'un oxyde métallique composite en tant que poudre fine, comprenant les étapes de préparation d'une solution de mélange contenant des ions d'au moins deux métaux, le mélange avec celle-ci d'une solution d'au moins un élément sélectionné dans le groupe constitué par l'alcool polyvinylique, le polyvinyl butyral et le polyéthylène glycol, l'évaporation afin de sécher le produit résultant, et ensuite la calcination de celui-ci.

9. Procédé de production d'une électrode, le procédé comprenant l'élaboration d'une poudre fine d'un oxyde métallique composite au moyen du procédé selon l'une quelconque des revendications 1 à 8, et le façonnage de la poudre fine en une électrode.

10. Procédé selon la revendication 9, dans lequel l'électrode est une électrode pour pile à combustible.
